# EUROPÄISCHE PATENTSCHRIFT

(11) **EP 0 531 576 B1**
(45) Veröffentlichungstag und Bekanntmachung des Hinweises auf die Patenterteilung: **05.03.1997**
(21) Anmeldenummer: 91118707.8
(22) Anmeldetag: 02.11.1991
(51) Int. Cl.: B01D 63/08, B01D 35/30

(54) **Vorrichtung und Gehäuse zum Filtern und Trennen von Strömungsmedien**
Device and housing for filtering and separating of fluids
Dispositif et boîtier pour la filtration et séparation de fluides

(30) Priorität: 13.09.1991 DE 4130481
(43) Veröffentlichungstag der Anmeldung: 17.03.1993
(73) Patentinhaber: DT MEMBRANFILTER VERTRIEBS GMBH, D-21107 Hamburg (DE)
(72) Erfinder: Mohn, Jürgen, W-2057 Reinbek (DE); Heine, Wilhelm, W-2100 Hamburg 90 (DE)
(74) Vertreter: Niedmers, Ole, Dipl.-Phys.

(56) Entgegenhaltungen:
- AT-A- 329 080
- DE-U- 8 709 105
- US-A- 4 940 562
- SOVIET PATENT ABSTRACTS Section Q53, Week 8833, Class Q, Derwent Publications Ltd., London, GB; & SU - A - 1370287 (TOLYATTI POLY) 30.01.1988
- R.RAUTENBACH "Membrantrennverfahren" 1981, SALLE VERLAG, Frankfurt, Seiten 85-87

## Beschreibung

Die Erfindung betrifft eine Vorrichtung zum Filtern und Trennen von Strömungsmedien durch Umkehrosmose, Ultra- und Mikrofiltration, mit einem in einem geschlossenen Gehäuse angeordneten, von scheibenförmig ausgebildeten Abstandselementen sowie Filterelementen gebildeten Membranstapel, wobei jeweils zwischen zwei Abstandselementen, die vom Strömungsmedium umflossen werden, ein Filterelement eingeschlossen ist.

Eine Vorrichtung dieser Art ist bekannt (DE-C 37 15 183). Bei dieser bekannten Vorrichtung ist das Gehäuse in Form eines im wesentlichen zylindrischen Rohres ausgebildet, in dem der Membranstapel in einem im Rohr ausgebildeten Hohlraum, der beidseitig durch Endscheiben bzw. Flanschen, die gegenüber der Rohrinnenwand abgedichtet sind, aufgenommen wird. Vorrichtungen dieser Art müssen beispielsweise bei niedersalzigem Wasser als Strömungsmedium bzw. Rohlösung aber auch beispielsweise bei radioaktiv kontaminiertem Wasser bei sehr hohen Drücken betrieben werden, beispielsweise im Bereich von 10 bis 15 bar. Würde man beispielsweise die bekannte Vorrichtung mit rohrförmigem Gehäuse bei derartigen Drücken betreiben, müßte die Rohrwandung extrem dick ausgebildet sein, um ein Zerbersten der Vorrichtung bei den bestimmungsgemäß anzuwendenden Drücken zu vermeiden. Ggf. müßten auch noch zusätzliche stabilitätsverstärkende Maßnahmen im Bereich der Endflansche bzw. Endscheiben vorgenommen werden, um diesen Drücken begegnen zu können. Daraus ergibt sich ein wesentlicher Mangel, denn eine derart druckfeste Aufbereitung würde zu sehr hohen Gestehungskosten der Vorrichtung führen bei gleichzeitiger wesentlicher Erhöhung des Gewichts, so daß infolgedessen die Vorrichtung für viele sich eigentlich bietende Anwendungsfälle nicht zur Verfügung gestellt werden kann, da das Preis-Leistungsverhältnis sich zu sehr negativ verschoben hat.

Vorrichtungen dieser Art sollten beispielsweise in großer Zahl unmittelbar vor Ort, d. h. unmittelbar an der Quelle des kontaminierten Strömungsmediums einsetzbar sein und müssen dabei auch leicht handhabbar sein, dennoch müssen sie aber diesen hohen Betriebsdrücken ohne weiteres standhalten können.

Es ist Aufgabe der vorliegenden Erfindung, eine Vorrichtung zum Filtern und Trennen von Strömungsmedien der eingangs genannten Art zu schaffen, die hohen Betriebsdrücken im Bereich von 15 bar und mehr auch im Dauereinsatz standzuhalten vermag, die sich auch zum massenhaften Einsatz aufgrund ihrer geringen Gestehungskosten eignet, die auch in kleinsten Gesamtanlagen bei gering zur Verfügung stehendem Raumvolumen eingesetzt werden kann und die auch im Bereich der Gewinnung von Trinkwasser für den menschlichen Bedarf den lebensmittelhygienischen Anforderungen genügt.

Gelöst wird die Aufgabe gemäß der Erfindung dadurch, daß das Gehäuse im wesentlichen kugelförmig ausgebildet ist und aus zwei im wesentlichen halbkugelförmig ausgebildeten Gehäuseelementen besteht, wobei der Membranstapel mittels eines diesen im wesentlichen zentral durchquerenden, für eine Rohlösungszufuhr rohrförmig ausgebildeten Spannbolzens zusammengehalten wird, der im Gehäuse befestigbar ist.

Der Vorteil der erfindungsgemäßen Vorrichtung liegt im wesentlichen darin, daß diese aufgrund der kugelförmigen Ausbildung des Gehäuses eine extrem hohe Druckfestigkeit aufweist und das kugelförmige Gehäuse sehr preiswert hergestellt werden kann, zumal, anders als bei der aus dem Stand der Technik bekannten rohrförmigen Vorrichtung keine Endscheiben bzw. Endflanschen vorgesehen zu werden brauchen, die präzise hergestellt, eingepaßt und abgedichtet werden müssen. Aufgrund des kugelförmigen Aufbaus des Gehäuses läßt sich die Vorrichtung ebenfalls vorteilhafterweise auf kleinstem Raum unterbringen und kann demzufolge an Orten eingesetzt werden, die mit den bekannten zylinderförmigen Gehäusen, die zudem ggf. noch zur Erreichung hoher Druckfestigkeit verstärkt ausgebildet sind, nicht bestückt werden können.

Für die Gewährleistung einer guten Zugänglichkeit des Membranstapels im Gehäuseinneren für einfache Herstellungs-, Wartungs- und Austauschzwecke besteht das Gehäuse aus zwei im wesentlichen halbkugelförmig ausgebildeten Gehäuseelementen, die zudem noch den Vorteil haben, daß sie sich als sehr einfach ausbildbare Formteile kostengünstig herstellen lassen.

Der vorgesehene Spannbolzen hat wenigstens die Funktion des Zusammenspannens des Membranstapels und der Zufuhrleitung der zu trennenden Rohlösung in den Rohlösungseintrittsraum, so daß der Membranstapel gleichmäßig mit Rohlösung beaufschlagt wird, und das zentrale Zusammenhalten des Membranstapels als solchem.

Die halbkugelförmig ausgebildeten Gehäuseelemente sind vorteilhafterweise mittels einer Mehrzahl lösbarer Verbindungselemente zusammenhaltbar, die an beiden Gehäuseelementen im Bereich ihren gegenseitigen Anlagefläche durch in der Gehäusefläche vorgesehene Aussparungen hindurchgreifen.

Zwar ist es grundsätzlich möglich, die Gehäuseelemente im Bereich ihrer Berühungsflächen derart auszubilden, daß sie dort auch bei Betriebsdruck ein flüssigkeitsdichtes Gesamtgehäuse bilden, es hat sich jedoch als vorteilhaft und kostengünstig herausgestellt, die Gehäuseelemente im Bereich ihrer Berührungsflächen mittels einer umlaufenden Dichtung, beispielsweise mittels eines O-Rings, abdichtbar auszugestalten.

Werden bei der Vorrichtung beispielsweise Filterelemente nach Art eines Membrankissens verwendet, weist der Spannbolzen der Vorrichtung vorteilhafterweise wenigstens eine axiale Permeatabflußrinne auf, die über ein Anschlußelement, das im Gehäuseinneren angeordnet ist, mit dem Gehäuse verbunden ist, beispielsweise mittels lösbarer Verbindungselemente wie Schrauben oder dgl.. In diesem Falle dient der Spannbolzen zusätzlich noch vorteilhafterweise als Permeatabfluß- bzw. Leitorgan.

Der zwischen einer vorbestimmten Seite des Membranstapels und dem Gehäuse der Vorrichtung ausgebildete Retentataustrittsraum ist vorteilhafterweise ebenfalls über ein Anschlußelement mit dem Gehäuse verbunden, wobei das Anschlußelement, in das die Permeatabflußrinne mündet, identisch mit dem Anschlußelement zur Verbindung des Retentataustrittsraumes mit dem Gehäuse und somit einstückig ausgebildet sein kann. Weil dieses ein einziges einheitliches Anschlußelement für mehrere Zwecke ist, reduzieren sich dadurch noch einmal die Gestehungskosten bei der Verwendung einer derartigen Ausgestaltung des Anschlußelementes.

Bei einer weiteren vorteilhaften Ausgestaltung der Vorrichtung ist der Membranstapel derart abgedichtet im Gehäuse angeordnet, daß der Rohlösungseintrittsraum zwischen Membranstapel und Gehäuse keine unmittelbare Verbindung mit dem Retentataustrittsraum zwischen Membranstapel und Gehäuse aufweist, d. h. es sind keine gesonderten Maßnahmen wie Zwischengehäuse und dgl. zur Aufnahme des Membranstapels im Gehäuse nötig, um eine Trennung zwischen Rohlösungseintrittsraum und Retentataustrittsraum zu gewährleisten.

Die Dichtung des Membranstapels gegenüber dem Gehäuse erfolgt vorzugsweise über umlaufende Dichtringe, die zwischen geeignet ausgebildeten Vorsprüngen der Gehäuseinnenoberfläche und dem Membranstapel wirken. Im Zuge der Montage des Membranstapels im Gehäuseinnenraum kann somit auf einfache Weise die Dichtung und damit die Trennung von Rohlösungseintrittsraum und Retentataustrittsraum erreicht werden.

Grundsätzlich kann das Gehäuse aus einem beliebigen geeigneten Werkstoff, beispielsweise aus einem metallischen Werkstoff bestehen. Unter Berücksichtigung des Erfordernisses der kostengünstigen Herstellbarkeit bei gleichzeitiger Fähigkeit, hohen Flächenkräften standzuhalten, ist es vorteilhaft, das Gehäuse bzw. die Gehäuseelemente aus Kunststoffwerkstoff auszubilden, wobei es dabei vorteilhaft ist, insbesondere spritzfähigen Kunststoffwerkstoff vorzusehen, da dadurch in einem Spritzvorgang das Gehäuse bzw. die Gehäuseelemente ohne die Notwendigkeit einer irgendwie gearteten Nachbehandlung in einem Herstellungsschritt kostengünstig und massenweise hergestellt werden können.

Insbesondere unter Berücksichtigung des Erfordernisses einer lebensmittelhygienischen Unbedenklichkeit des gehäusesbildenden Werkstoffs ist es vorteilhaft, dafür Acrylnitril-Butadien-Styrol (ABS) oder Polystyrol zu verwenden, die zumdem beide spritzfähig und für Anwendungen im Lebensmittelbereich zugelassen sind.

Die Erfindung wird nachfolgend unter Bezugnahme auf die schematischen Zeichnungen an Hand eines Ausführungsbeispieles eingehend beschrieben. Darin zeigen:
- Fig. 1: in der Seitenansicht eine Vorrichtung, bestehend aus zwei halbkugelförmig ausgebildeten Gehäuseelementen, im Schnitt,
- Fig. 2: eine Draufsicht auf die in Figur 1 dargestellte Vorrichtung in teilweise geschnittener Darstellung,
- Fig. 3: eine Seitenansicht der Vorrichtung, gegenüber der Darstellung von Figur 1 um 90 ° verdreht wobei das obere halbkugelförmige ausgebildete Gehäuseelement geschnitten dargestellt ist, unter Weglassung des Spannbolzens und
- Fig. 4: der durch den Spannbolzen zusammengehaltene Membranstapel, der im Innenraum des Gehäuses der Vorrichtung angeordnet wird.

Die Vorrichtung 10 besteht im wesentlichen aus einem kugelförmig ausgebildetem Gehäuse 11, daß bei der in den Figuren dargestellten Ausführungsform wiederrum aus zwei im wesentlichen halbkugelförmig ausgebildeten Gehäuseelementen 16, 17 besteht. Das Gehäuse 11 bzw. die Gehäuseelemente 16, 17 weisen vorbestimmte Gehäusewandstärken auf, die in Abhängigkeit des zu erwartenden Betriebsdrucks geeignet ausgewählt werden. Beide Gehäuseelemente 16, 17 weisen im Bereich ihrer Berührungsflächen 160, 170 und im wesentlichen zu diesen parallel beabstandet Aussparungen 28 auf, die in ihrem Bodenbereich Löcher 29, 30 aufweisen, durch die Verbindungselemente 18 in Form eines Bolzens mit Mutter hindurchgreifen und die beiden Gehäuseelemente 16, 17 druckfest über ihre Berührungsflächen 160, 170 aneinander pressen können. Im Bereich der Berührungsflächen 160, 170 der Gehäuseelemente 16, 17 ist wenigstens in einem Gehäuseelement 16, 17 eine umlaufende Nut 31 ausgebildet, in der ein umlaufender Dichtring 19, beispielsweise in Form O-Rings, angeordnet ist.

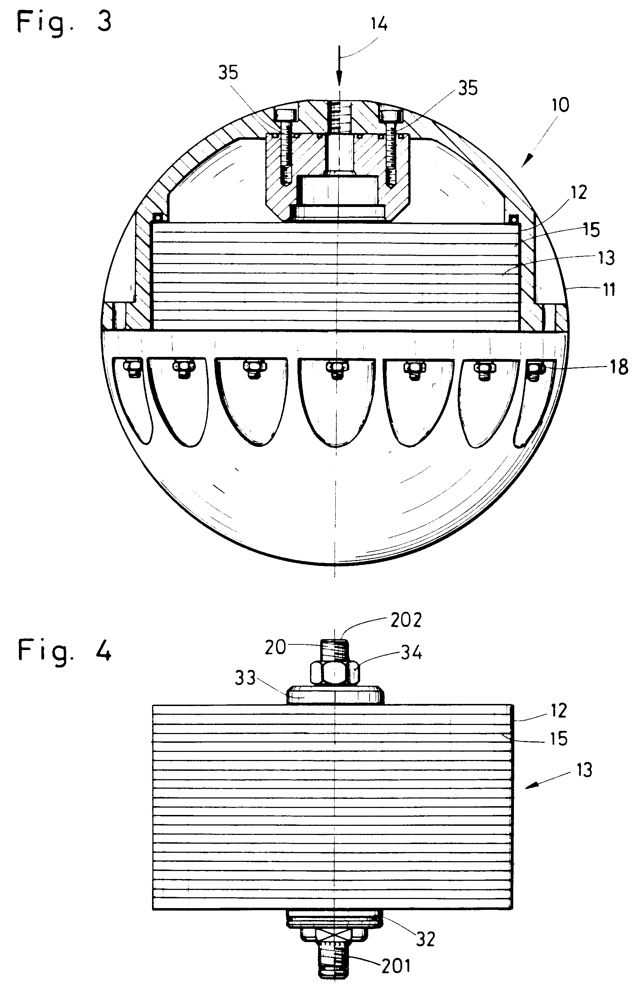

Der Membranstapel 13, vergl. insbesondere Figur 4, wird mittels eines diesen im wesentlichen zentral durchquerenden Spannbolzens 20 zusammengehalten und zwar dort über beiderseits des Membranstapels 13 angeordnete Scheiben 32, 33, die über eine mit dem Spannbolzen 20 zusammenwirkende Mutter 34 aneinandergepreßt werden.

Die an sich bekannten scheibenförmig ausgebildeten Abstandselemente 12 schließen jeweils zwischen sich ein von der Rohlösung 14 (Strömungsmedium) umflossenes Filterelement 15 ein, dessen Anordnung hier lediglich schematisch dargestellt ist. Je nach Art der Ausbildung der Abstandselemente 12 werden die Filterelemente 15, die in der Regel sogenannte Membrankissen sind, entweder mäanderförmig von der Rohlösung 14 umflossen (serielles Durchströmen der Rohlösung 14 durch den Membranstapel 13) oder aber parallel mit Rohlösung 14 beaufschlagt (parallele Beaufschlagung aller Filterelemente 15 des Membranstapels 13). Kombinationen aus serieller und paralleler Durchströmung sind denkbar und möglich.

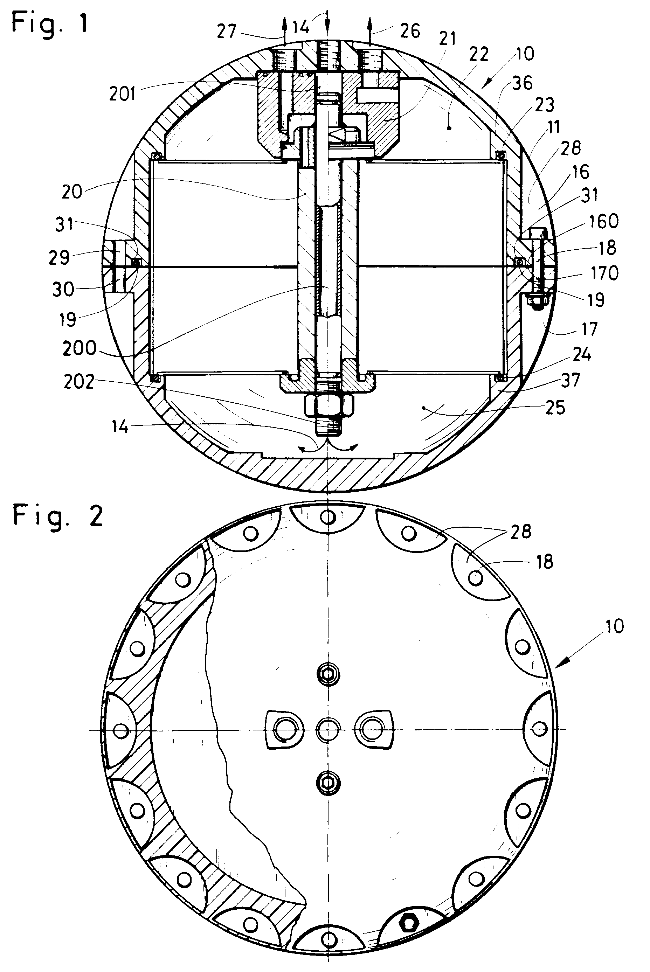

Der Spannbolzen 20 ist rohrförmig ausgebildet, wobei die rohrförmige Durchführung 200 der Zufuhr von Rohlösung 14 in den Rohlösungseintrittsraum 25 im Inneren des Gehäuses 11 dient, vergl. insbesondere Figur 1. An einer geeignet ausgeformten Innenfläche des halbkugelförmigen oberen Gehäuseelementes 16 ist ein Anschlußelement 21 angeordnet, das als einstückig ausgebildetes Formteil sowohl eine Verbindung zum benachbart dazu im Gehäuse 11 ausgebildeten Retentataustrittsraum 22 zum Austritt des Retentats 26 aus der Vorrichtung 10 umfaßt, als auch eine Verbindung zum Austritt des Permeats 27 aus der Vorrichtung 10 zu einem um den Spannbolzen 20 herum angeordneten Bereich, beispielsweise einer am Spannbolzen 20 ausgebildetem, hier nicht gesondert dargestellten Permeatabflußrinne, in die das von den Filterelementen 15 zugeführte Permeat 27 auf an sich bekannte Weise geleitet wird. Desweiteren nimmt das Anschlußelement 21 das Eintrittsende 201 für die der Vorrichtung 10 zugeführte, zu trennende Rohlösung 14 (Strömungsmedium) haltend und dichtend auf. Das Anschlußelement 21 ist beispielsweise mittels Schraubverbindungen 35, vergl. Figur 3, verbunden.

Ein in Figur 4 dargestellter Membranstapel 13 ist über Dichtmittel abgedichtet 23, 24 im Gehäuse 11 bzw. zwischen den Gehäuseelementen 16, 17 angeordnet und zwar derart, daß der Rohlösungseintrittsraum 25 zwischen Membranstapel 13 und dem Gehäuse 11 keine unmittelbare Verbindung mit dem Retentataustrittsraum 22 zwischen Membranstapel 13 und Gehäuse 11 ausweist und Rohlösung 14 nun nach entweder mäanderförmigem Durchtritt durch den Membranstapel 13 bzw. nach parallelem Durchlaufen des Membranstapels 13 als Retentat 26 in den Retentataustrittsraum 22 gelangen kann, nicht aber direkt. Die Dichtungen 23, 24 sind in um die Gehäuseelemente 16, 17 im wesentlichen umlaufenden, in den Gehäuseelementen 16, 17 geeignet ausgebildeten Schultern 36, 37 angeordnet, gegen die sich der Membranstapel 13 bei bestimmungsgemäßer Montage der Vorrichtung 10 dichtend legt.

Der eigentliche Trennvorgang der Rohlösung 14 nach Eintritt in die Vorrichtung 10 in Retentat 26 und Permeat 27, die getrennt aus der Vorrichtung 10 austreten, ist unter Verwendung von Filterelementen 15 als solcher bekannt, so daß an dieser Stelle darauf nicht weiter eingegangen zu werden braucht.

Das Gehäuse 11 bzw. die Gehäuseelemente 16, 17 bestehen aus einem Kunststoff der vorzugsweise spritzfähig ist, so daß die Gehäuseelemente 16, 17 beispielsweise in einem Arbeitsgang in einem Kunststoffhochdruckspritzwerkzeug kostengünstig hergestellt werden können. Der Kunststoffwerkstoff, der grundsätzlich beliebig geeignet ausgewählt sein kann, besteht vorzugsweise aus dem lebensmittelhygienischen unbedenklichen Acrylnitril-Butadien-Styrol (ABS) oder aus Polystyrol. Das Anschlußelement 21 besteht vorzugsweise aus einem metallischen Werkstoff wie nichtrostendem Stahl oder dergleichen, was gleichermaßen für den Spannbolzen 20, die Scheiben 32, 33 sowie die Mutter 34 und hier nicht gesondert dargestellte übrige Verbindungskomponenten gilt.

### Bezugszeichenliste

- 10: Vorrichtung
- 11: Gehäuse
- 12: Abstandselement
- 13: Membranstapel
- 14: Rohlösung (Strömungsmedium)
- 15: Filterelement
- 16: Gehäuseelement
- 160: Berührungsfläche
- 17: Gehäuseelement
- 170: Berührungsfläche
- 18: Verbindungselement
- 19: Dichtung
- 20: Spannbolzen
- 200: Durchführung
- 201: Eintrittsende
- 202: Austrittsende
- 21: Anschlußelement
- 22: Retentataustrittsraum
- 23: Dichtung
- 24: Dichtung
- 25: Rohlösungseintrittsraum
- 26: Retentat
- 27: Permeat
- 28: Aussparung
- 29: Loch
- 30: Loch
- 31: Nute
- 32: Scheibe
- 33: Scheibe
- 34: Mutter
- 35: Schraube
- 36: Schulter
- 37: Schulter

## Patentansprüche

1. Vorrichtung (10) zum Filtern und Trennen von Strömungsmedien durch Umkehrosmose, Ultra- und Mikrofiltration, mit einem in einem geschlossenen Gehäuse (11) angeordneten, von scheibenförmig ausgebildeten Abstandselementen (12) sowie Filterelementen (15) gebildeten Membranstapel (13), wobei jeweils zwischen zwei Abstandselementen (12), die vom Strömungsmedium (14) umschlossen werden, ein Filterelement (15) eingeschlossen ist, dadurch gekennzeichnet, daß das Gehäuse (11) im wesentlichen kugelförmig ausgebildet ist und aus zwei im wesentlichen halbkugelförmig ausgebildeten Gehäuseelementen (16, 17) besteht, wobei der Membranstapel (13) mittels eines diesen im wesentlichen zentral durchquerenden, für eine Rohlösungszufuhr rohrförmig ausgebildeten Spannbolzens (20) zusammengehalten wird, der im Gehäuse (11) befestigbar ist.

2. Vorrichtung nach Anspruch 1, dadurch gekennzeichnet, daß die Gehäuseelemente (16, 17) mittels einer Mehrzahl lösbarer Verbindungselemente (18) zusammenhaltbar sind.

3. Vorrichtung nach einem oder beiden der Ansprüche 1 oder 2, dadurch gekennzeichnet, daß die Gehäuseelemente (16, 17) im Bereich ihrer Berührungsflächen (160, 170) mittels einer umlaufenden Dichtung (19) abdichtbar sind.

4. Vorrichtung nach einem oder mehreren der Ansprüche 1 bis 3, dadurch gekennzeichnet, daß der Spannbolzen (20) wenigstens eine axiale Permeatabschlußrinne aufweist, die über ein Anschlußelement (21) mit dem Gehäuse (11) verbunden ist.

5. Vorrichtung nach einem oder mehreren der Ansprüche 1 bis 4, dadurch gekennzeichnet, daß der Retentataustrittsraum (22) über ein Anschlußelement (21) mit dem Gehäuse (11) verbunden ist.

6. Vorrichtung nach einem oder mehreren der Ansprüche 1 bis 5, dadurch gekennzeichnet, daß der Membranstapel (13) derart abgedichtet (23, 24) im Gehäuse (11) angeordnet ist, daß der Rohlösungseintrittsraum (25) zwischen Membranstapel (13) und Gehäuse (11) keine unmittelbare Verbindung mit dem Retentataustrittsraum (22) zwischen Membranstapel (13) und Gehäuse (11) aufweist.

7. Vorrichtung nach Anspruch 6, dadurch gekennzeichnet, daß die Dichtung (23, 24) des Membranstapels (13) gegenüber dem Gehäuse (11) mittels umlaufender Dichtringe erfolgt.

8. Vorrichtung nach einem oder mehreren der Ansprüche 1 bis 7, dadurch gekennzeichnet, daß das Gehäuse (11) aus einem Kunststoffwerkstoff besteht.

9. Vorrichtung nach Anspruch 8, dadurch gekennzeichnet, daß der Kunststoffwerkstoff spritzfähig ist.

10. Vorrichtung nach einem oder beiden der Ansprüche 8 oder 9, dadurch gekennzeichnet, daß der Kunststoffwerkstoff Acrylnitril-Butadien-Styrol (ABS) ist.

11. Vorrichtung nach einem oder beiden der Ansprüche 8 oder 9, dadurch gekennzeichnet, daß der Kunststoffwerkstoff Polystyrol ist.

## Claims

1. A device 10 for filtering and separating fluid media by reverse osmosis, using ultra- and microfiltration by means of an assembly of membranes 13 in an enclosed casing 11 and made up of disc-shaped spacing elements 12 and filtering elements 15, there being one filtering element 15 enclosed between every two spacing elements 12 around which the fluid medium 14 circulates, characterized in that the casing 11 is substantially spherical in shape and comprises two substantially hemispherical casing elements 16 and 17, the membrane assembly 13 being held together by a clamping bolt 20 which passes through it in an essentially central position and is of tubular construction for the supply of untreated solution, and which can be fixed in the casing 11.

2. Device according to Claim 1, characterized in that the casing elements 16 and 17 may be held together by a number of detachable fasteners 18.

3. Device according to one or both of Claims 1 and 2, characterized in that the casing elements 16 and 17 can be sealed in the area of their mating surfaces 160 and 170 by means of a seal 19 running round them.

4. Device according to one or more of Claims 1 to 3, characterized in that the clamping bolt 20 has at least one axial permeate drainage channel, which is connected to the casing 11 by a connecting element 21.

5. Device according to one or more of Claims 1 to 4, characterized in that the retentate discharge chamber 22 is connected to the casing 11 by a connecting element 21.

6. Device according to one or more of Claims 1 to 5, characterized in that the membrane assembly 13 is disposed and sealed by seals 23 and 24 in the casing 11 in such a way that the untreated solution intake chamber 25 between the membrane assembly 13 and the casing 11 has no direct connection with the retentate discharge chamber 22 between the membrane assembly 13 and the casing 11.

7. Device according to Claim 6, characterized in that the sealing of the membrane assembly 13 in relation to the casing 11 is effected by means of sealing rings 23 and 24 running round it.

8. Device according to one or more of Claims 1 to 7, characterized in that the casing 11 is made of a plastic material.

9. Device according to Claim 8, characterized in that the plastic material can be injected.

10. Device according to one or both of Claims 8 and 9, characterized in that the plastic material is acrylonitrile butadiene styrene (ABS).

11. Device according to one or both of Claims 8 and 9, characterized in that the plastic material is polystyrene.

## Revendications

1. Dispositif (10) pour la filtration et la séparation de milieux en écoulement par osmose inverse, ultrafiltration et microfiltration, comportant un empilage de membranes (13), disposé dans un boîtier fermé (11) et formé par des éléments formant entretoises (12) en forme de disques ainsi que par des éléments filtrants (15), un élément filtrant (15) étant inséré respectivement entre deux éléments formant entretoises (12), qui sont enveloppés par le milieu en écoulement (14), caractérisé en ce que le boîtier (11) est agencé essentiellement avec une forme sphérique et est constitué par deux éléments de boîtier (16,17), qui sont agencés avec une forme essentiellement hémisphérique, l'empilage de membranes (13) étant maintenu assemblé au moyen d'un boulon de serrage (20), qui s'étend transversalement essentiellement en position centrée et possède une forme tubulaire pour l'amenée de la solution brute et qui peut être fixé dans le boîtier (11).

2. Dispositif selon la revendication 1, caractérisé en ce que l'élément de boîtier (16,17) peut être maintenu assemblé au moyen d'une multiplicité de liaisons amovibles (18).

3. Dispositif selon l'une des revendications 1 ou 2 ou les deux, caractérisé en ce que les éléments de boîtier (16,17) peuvent être fermés de façon étanche, dans la zone de leurs surfaces de contact (160,170), au moyen d'une garniture d'étanchéité périphérique (19).

4. Dispositif selon une ou plusieurs des revendications 1 à 3, caractérisé en ce que le boulon de serrage (20) possède au moins une rainure axiale d'évacuation du perméat, qui est reliée au boîtier (11) par l'intermédiaire d'un élément de raccordement (21).

5. Dispositif selon une ou plusieurs des revendications 1 à 4, caractérisé en ce que la chambre (22) de sortie du rétentat est reliée au boîtier (11) par l'intermédiaire d'un élément de raccordement (21).

6. Dispositif selon une ou plusieurs des revendications 1 à 5, caractérisé en ce que l'empilage de membranes (13) est disposé d'une manière étanche (23,24) dans le boîtier (11) de telle sorte que la chambre (25) d'entrée de la solution brute entre l'empilage de membranes (13) et le boîtier (11) ne possède aucune liaison directe avec la chambre (22) de sortie du rétentat entre l'empilage de membranes (13) et le boîtier (11).

7. Dispositif selon la revendication 6, caractérisé en ce que l'étanchéité (23,24) de l'empilage de membranes (13) par rapport au boîtier (11) est réalisée à l'aide de bagues d'étanchéité périphériques.

8. Dispositif selon une ou plusieurs des revendications 1 à 7, caractérisé en ce que le boîtier (11) est formé d'une matière plastique.

9. Dispositif selon la revendication 8, caractérisé en ce que la matière plastique peut être moulée par injection.

10. Dispositif selon l'une des revendications 8 ou 9 ou les deux, caractérisé en ce que la matière plastique est le copolymère acrylonitrile-butadiène-styrène.

11. Dispositif selon l'une des revendications 8 ou 9 ou les deux, caractérisé en ce que la matière plastique est du polystyrène.
